# EUROPÄISCHE PATENTANMELDUNG

(11) **EP 0 700 920 A1**
(43) Veröffentlichungstag der Anmeldung: **13.03.1996**
(21) Anmeldenummer: 95114015.1
(22) Anmeldetag: 07.09.1995
(51) Int. Cl.: C07F 7/12

(54) **Verfahren zur Herstellung von wasserstoffhaltigen Methylchlorsilanen**

(30) Priorität: 08.09.1994 DE 4431995
(71) Anmelder: Wacker-Chemie GmbH, D-81737 München (DE)
(72) Erfinder: Mautner, Konrad, Dr., D-84556 Kastl (DE); Goetze, Ulrich, Dr., D-84489 Burghausen (DE); Schinabeck, Anton, D-84489 Burghausen (DE); Kalchauer, Wilfried, Dr., D-84489 Burghausen (DE)
(74) Vertreter: Fritz, Helmut, Dr.

(57) **Zusammenfassung**

In dem Verfahren werden Disilane mit Chlorwasserstoff in Gegenwart von Katalysator bestehend aus
A) Palladium(0) und Platin(0) und
B) organischer Verbindung, die ausgewählt wird aus tertiären Aminen, Carbonsäureamiden, Alkylharnstoffen, tertiären Phosphinen, Phosphorsäureamiden, quartären Ammoniumhalogeniden, quartären Phosphoniumhalogeniden oder deren Gemischen
zu wasserstoffhaltigen Methylchlorsilanen umgesetzt.

## Beschreibung

Die Erfindung betrifft ein Verfahren zur Herstellung von wasserstoffhaltigen Methylchlorsilanen durch Spaltung von Disilanen mit Chlorwasserstoff in Gegenwart von Katalysator bestehend aus A) Palladium(0) und Platin(0) und B) organischer Verbindung, die ausgewählt wird aus tertiären Aminen, Carbonsäureamiden, Alkylharnstoffen, tertiären Phosphinen und Phosphorsäureamiden, quartären Ammoniumhalogeniden, quartären Phosphoniumhalogeniden oder deren Gemischen.

Bei der Direktsynthese von Methylchlorsilanen nach Müller-Rochow aus Silicium und Chlormethan bei 250 bis 300°C mit Kupferkatalysatoren fallen als Nebenprodukte Disilane an. Hauptsächlich entstehen 1,1,2,2-Tetrachlordimethyldisilan und 1,1,2-Trichlortrimethyldisilan. Zusammen mit dem 1,1-Dichlortetramethyldisilan lassen sie sich durch katalysierte Umsetzung mit Chlorwasserstoff zu Monosilanen spalten. Als Katalysatoren werden bei R. Calas et al. J. Organometall. Chem., 225, 117, 1982 tertiäre Amine oder Amide sowie bei DD-A 274 227 Alkylharnstoffe oder Phosphorsäureamide verwendet. Als Hauptprodukte entstehen Methyltrichlorsilan, Dimethyldichlorsilan und Methyldichlorsilan. Die theoretische Ausbeute an Methyldichlorsilan wird nicht erreicht, da in einer Nebenreaktion das wasserstoffhaltige Silan mit Chlorwasserstoff unter Wasserstoffabspaltung zu einem Chlorsilan abreagiert.

1,2-Dichlortetramethyldisilan, Chlorpentamethyldisilan und Hexamethyldisilan können mit den oben genannten Katalysatoren und Chlorwasserstoff nicht gespalten werden. In der JP-A 54-9228 wird Tetrakis(triphenylphosphin)palladium(0) als Katalysator zur Spaltung von Methylchlordisilanen, auch 1,2-Dichlortetramethyldisilan eingesetzt. Es werden wasserstoffhaltige Monosilane erhalten. Die Raum-Zeit-Leistung ist allerdings recht gering.

Es bestand die Aufgabe, einen Katalysator zur Spaltung sämtlicher bei der Methylchlorsilansynthese anfallender Disilane bereitzustellen, der die Disilane mit hoher Raum-Zeit-Leistung spaltet und die wasserstoffhaltigen Methylchlorsilane in besserer Ausbeute liefert.

Die Erfindung betrifft ein Verfahren zur Herstellung von wasserstoffhaltigen Methylchlorsilanen der allgemeinen Formel I

RₓCl₃₋ₓSiH, (I)

bei dem Disilane der allgemeinen Formel II

RₓCl₃₋ₓSi-SiRₓCl₃₋ₓ, (II)

wobei in den allgemeinen Formeln I und II
- **R**: ein Wasserstoffatom, einen Methyl-, Phenyl- oder Ethylrest bedeutet und
- **x**: die Werte 0, 1, 2 oder 3 hat,
mit Chlorwasserstoff in Gegenwart von Katalysator bestehend aus
A) Palladium(0) und Platin(0) und
B) organischer Verbindung, die ausgewählt wird aus tertiären Aminen, Carbonsäureamiden, Alkylharnstoffen, tertiären Phosphinen, Phosphorsäureamiden, quartären Ammoniumhalogeniden, quartären Phosphoniumhalogeniden oder deren Gemischen,
umgesetzt werden.

Das Verfahren spaltet sämtliche Disilane mit hoher Raum-Zeit -Leistung. Gleichzeitig wirkt Katalysatorbestandteil A moderierend auf den Katalysatorbestandteil B, so daß die Ausbeute an wasserstoffhaltigen Methylchlorsilanen hoch ist.

Die eingesetzten Disilane können noch Methylchlorsilane, Kohlenwasserstoffe, Chlorkohlenwasserstoffe, Carbosilane und Siloxane enthalten. Vorzugsweise beträgt der Gehalt an Disilanen mindestens 50 Gew.-%.

Der Chlorwasserstoff wird vorzugsweise gasförmig zugegeben. Vorzugsweise werden 1 bis 4 Mol Chlorwasserstoff, insbesondere 1 bis 1,5 Mol Chlorwasserstoff pro Mol Si-Si Bindungen verwendet. Da Chlorwasserstoff bei den in Frage kommenden Temperaturen und Drücken als Gas vorliegt, ist er nach der Umsetzung sehr leicht aus den Methylchlorsilanen abtrennbar. Es kann handelsüblicher Chlorwasserstoff eingesetzt werden.

Als Katalysatorbestandteil A können Palladium oder Platin der Oxidationsstufe 0 entweder in metallischer Form oder als Komplexverbindungen eingesetzt werden.

Als Komplexverbindungen sind im Disilangemisch und in den hergestellten Methylchlorsilanen lösliche Verbindungen bevorzugt. Beispiele für bevorzugte Komplexverbindungen sind Tetrakis(triphenylphosphin)palladium(0), Tetrakis(triphenylphosphin)platin(0), Bis[bis(1,2diphenylphosphino)ethan]palladium(0) und Tetrakis(methyldiphenylphosphin)palladium(0). Besonders bevorzugt sind Tetrakis(triphenylphosphin)palladium(0) und Tetrakis(triphenylphosphin)platin(0).

Wenn Palladium oder Platin in metallischer Form eingesetzt werden, können sie in beliebiger Form, beispielsweise als Netz oder Blech oder in feinverteilter Form eingesetzt werden. Vorzugsweise werden die Metalle auf Träger aufgebracht, um sie beispielsweise in einem durchströmten Festbettreaktor, wie einer Destillationskolonne oder einem Durchflußreaktor, einsetzen zu können. Die Träger sind dann vorzugsweise stückig, um den Druckabfall beim Durchströmen mit Disilanen der allgemeinen Formel II möglichst gering zu halten.

Besonders bevorzugt werden Metalle auf pulvrigen Trägern, um sie beispielsweise in Umlaufverdampfern von Destillationskolonnen oder Reaktoren einzusetzen.

Bei den Trägermaterialien kommen alle gängigen Materialien, wie Kohlen und Keramikträger, in Frage. Beispiele für Träger sind Aktivkohle und anorganische Oxide, wie Siliciumdioxid, Aluminium(III)oxid, Silikate, Titandioxid, Zirkondioxid; Carbide, wie Siliciumcarbid; wobei Aktivkohle und Siliciumdioxid bevorzugte Beispiele sind. Besonders bevorzugt als Katalysator A ist Palladium auf Aktivkohle.

Derartige Katalysatoren A, bei denen sich die feinverteilten Metalle auf Trägern befinden, können durch Reduktion von Metallverbindungen in Gegenwart des Trägers hergestellt werden.

Die Konzentration der Metalle auf den Trägern beträgt vorzugsweise 0,5 bis 5 Gew.-%, bezogen auf das Gesamtgewicht des Trägers und des Metalls; es können aber auch höhere oder niedrigere Konzentrationen verwendet werden.

Vorzugsweise beträgt der Anteil an Palladium oder Platin der Oxidationsstufe 0 des Katalysatorbestandteils A mindestens 3 mol-%, vorzugsweise höchstens 25 mol-%, bezogen auf alle Katalysatorbestandteile.

Die tertiären Amine B weisen vorzugsweise Alkylreste oder Arylreste mit 1 bis 10 Kohlenstoffatomen auf, welche mit Halogenatomen substituiert sein können. Beispiele für bevorzugte tertiäre Amine sind Tributylamin, Trioctylamin, Triisononylamin und Triphenylamin.

Eingesetzt werden können auch verbrückte Di- oder Triamine, wie Tetramethylethylendiamin, und Diaza[2,2,2]bicyclooctan.

Zu den tertiären Aminen zählen auch 3 - 7-Ring-Heterocyclen, auch anneliert, mit mindestens einem basischen Stickstoffatom und 2 - 10 Kohlenstoffatomen. Die Ringe können C₁ - C₁₀-Alkyl- und/oder Halogensubstituenten aufweisen. Beispiele sind Pyrazol, Pyridin, Chinolin, 2,5-Dimethylpyridin und 2-Chlorchinolin.

Die Carbonsäureamide B sind vorzugsweise mit 2 Alkylresten oder Arylresten von jeweils 1 bis 10 Kohlenstoffatomen substituierte Amide von Alkylcarbonsäuren oder Arylcarbonsäuren mit 1 bis 10 Kohlenstoffatomen. Die Aryl- oder Alkylreste der Carbonsäuren und am Stickstoffatom können mit Halogenatomen substituiert sein. Ebenfalls bevorzugt sind cyclische Carbonsäureamide, deren einer Alkylrest am Stickstoffatom mit dem Alkylrest an der Carbonsäure zu einem heterocyclischen Ring aus 5 oder 6 Ringatomen verbunden ist. Beispiele für bevorzugte Carbonsäureamide sind N,N,-Dimethylformamid, 1-Methyl-2-pyrrolidon, N,N-Diethylformamid und N,N-Dimethylbenzoesäureamid.

Die Alkylharnstoffe B weisen vorzugsweise Alkylreste mit 1 bis 10 Kohlenstoffatomen auf, welche mit Halogenatomen substituiert sein können. Ebenfalls bevorzugt sind cyclische Alkylharnstoffe, bei denen zwei Alkylreste miteinander zu einem heterocyclischen Ring aus 5 oder 6 Ringatomen verbunden sind. Beispiele für bevorzugte Alkylharnstoffe sind Tetramethylharnstoff, 1,3-Dimethyl-3,4,5,6-tetrahydro-2(1H)-pyrimidon (DMPU).

Die tertiären Phosphine B weisen vorzugsweise 2 oder 3 Arylreste von jeweils 6 bis 20 Kohlenstoffatomen auf. Die Arylreste sind gegebenenfalls mit Alkylresten mit 1 bis 10 Kohlenstoffatomen und Halogenatomen substituiert. Beispiele für bevorzugte tertiäre Phosphine und ggf. mit einem Halogenatom oder höchstens drei Alkylresten mit 1 bis 10 Kohlenstoffatomen substituierte Triphenylphosphine sind Triphenylphosphin und Bis(diphenylphosphino)ethan.

Die Phosphorsäureamide B sind vorzugsweise mit 6 Alkylresten von jeweils 1 bis 10 Kohlenstoffatomen substituiert. Die Alkylreste können mit Halogenatomen substituiert sein. Beispiele für bevorzugte Phosphorsäureamide sind Hexamethylphosphorsäuretriamid (HMPT), und Hexaethylphosphorsäuretriamid.

Die quartären Ammoniumhalogenide weisen vorzugsweise Alkyl-, Alkaryl- oder Arylgruppen mit 1 - 20 C-Atomen auf und sind ggf. mit Halogenatomen substituiert. Beispiele sind Tetramethylammoniumchlorid, Tetrabutylammoniumchlorid, Methyltrioctylammoniumchlorid, Benzyltrimethylammoniumchlorid und Distearyldimethylammoniumchlorid.

Zu den quartären Ammoniumhalogeniden zählen auch N-alkylierte 3 - 7-Ring-Heterocyclen, auch anneliert, mit 2 - 10 Kohlenstoffatomen. Die Ringe können C₁ - C₁₀-Alkyl- und/oder Halogensubstituenten aufweisen. Ein bevorzugtes Beispiel ist N-Methyl-pyridiniumchlorid.

Die quartären Phosphoniumhalogenide weisen vorzugsweise Alkyl-, Alkaryl- oder Arylgruppen mit 1 - 20 C-Atomen auf und sind ggf. mit Halogenatomen substituiert. Beispiele sind das Methyltriphenylphosphoniumchlorid, Tetrabutylphosphoniumchlorid und das Tetraphenylphosphoniumchlorid.

Besonders bevorzugt wird die Kombination von Palladiummetall auf Träger mit tertiären Phosphinen eingesetzt.

Als Halogenatome, die als Substituenten oder als Gegenion des Katalysatorbestandteils B fungieren, sind Fluor, Chlor und Brom bevorzugt. Besonders bevorzugt ist Chlor.

Bezogen auf die im Reaktor befindliche Menge an Disilanen werden vorzugsweise 0,5 bis 20 Gew.-%, insbesondere 1 bis 5 Gew.-% bezogen auf die Summe der Katalysatorbestandteile A und B eingesetzt.

Das Verfahren kann absatzweise, halbkontinuierlich oder vollkontinuierlich durchgeführt werden, wobei bevorzugt die vollkontinuierliche Fahrweise zum Einsatz kommt. Insbesondere wird das Verfahren kontinuierlich bei Siedetemperatur in einem Reaktor mit aufgesetzter Destillationseinrichtung durchgeführt. Dabei werden die Disilane der allgemeinen Formel II und Chlorwasserstoff in dem Maße zudosiert, wie entstandene wasserstoffhaltige Methylchlorsilane der allgemeinen Formel I zusammen mit wasserstofffreien Methylchlorsilanen abdestillieren.

Die Reaktionstemperatur beträgt vorzugsweise mindestens 100°C. Die Umsetzung findet vorzugsweise bei 0,08 bis 0,8 MPa statt.

Beispiele für wasserstoffhaltige Methylchlorsilane der allgemeinen Formel I sind Methyldichlorsilan, Dimethylchlorsilan und Trimethylsilan. Die ebenfalls im Verfahren entstehenden Methylchlorsilane, wie Methyltrichlorsilan, Dimethyldichlorsilan, Trimethylchlorsilan und Tetrachlorsilan sind ebenfalls wertvolle Produkte.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20° C .

### Beispiele

### Beispiele 1 bis 3

In einem 4 l Kolben mit aufgesetzter Destillationseinrichtung und Gaseinleitrohr für Chlorwasserstoff wurden der Katalysator und 2 l Disilangemisch vorgelegt. Chlorwasserstoff wurde eingeleitet und die Mischung bei Normaldruck zum Sieden (Reaktortemperatur 140°C) erhitzt. Über eine Dosiereinrichtung wurde das Disilangemisch so zugegeben, daß sich der Füllstand nicht veränderte. Die abdestillierten Produkte wurden kondensiert und analysiert. Das Disilangemisch bestand hauptsächlich aus 1,1,2,2-Tetrachlordimethyldisilan und 1,1,2-Trichlortrimethyldisilan und daneben 1,2-Dichlortetramethyldisilan, Chlorpentamethyldisilan, Hexamethyldisilan und Resten von Monosilanen und Kohlenwasserstoffen. Die Ergebnisse sind in Tabelle I zusammengestellt.

### Beispiel 1 (nicht erfindungsgemäß) Katalysator Tributylamin

### Beispiel 2 (nicht erfindungsgemäß) Katalysator Tetrakis(triphenylphosphin)palladium(0)

### Beispiel 3 (erfindungsgemäß) Tributylamin (95 mol-%) und Tetrakis(triphenylphosphin)palladium(0) (5 mol-%)

Beispiel 3 zeigt, daß durch die Kombination von Katalysatorenbestandteilen A und B der Anteil wasserstoffhaltiger Silane gegenüber den einzelnen Katalysatorbestandteilen deutlich gesteigert werden kann. Wird Tetrakis(triphenylphosphin)palladium(0) eingesetzt, entsteht Dimethylchlorsilan, das aus der Spaltung von 1,2-Dichlortetramethyldisilan und Chlorpentamethylsilan stammt. Die Raum-Zeitleistung bei reinem Pd(0)-Komplex ist aber deutlich geringer.

**Tabelle I**

| **Beispiel** | | **1** | **2** | **3** |
|---|---|---|---|---|
| Katalysatormenge | [g] | 15,5 | 5 | 20,5 |
| davon Pd(0)-Komplex | | -- | 5 | 5 |
| Dosierung Disilangemisch | [g/h] | 200 | 60 | 200 |
| Reaktortemperatur | [°C] | 140 | 140 | 140 |
| Kopftemperatur | [°C] | 60 | <90 | 55 |
| Destillatmenge | [g/h] | 210 | 60 | 205 |

| Zusammensetzung: | | | | |
|---|---|---|---|---|
| Dimethylchlorsilan | [Gew.-%] | 0 | 0,5 | 0,2 |
| Methyldichlorsilan | [Gew.-%] | 28 | 8 | 46,9 |
| Trimethylchlorsilan | [Gew.-%] | 0,7 | 2,5 | 0,9 |
| Methyltrichlorsilan + Dimethyldichlorsilan | [Gew.-%] | 70,7 | 72,4 | 51,1 |

### Beispiele 4 und 5

Die Beispiele wurden analog den Beispielen 1 bis 3 durchgeführt. Die Ergebnisse sind in Tabelle II zusammengestellt.

### Beispiel 4 (nicht erfindungsgemäß) Triphenylphosphin

### Beispiel 5 (erfindungsgemäß) Triphenylphosphin (97 mol-%) und Tetra kis(triphenylphosphin)palladium(0) (3 mol-%)

**Tabelle II**

| **Beispiel** | | **4** | **5** |
|---|---|---|---|
| Katalysatormenge | [g] | 40 | 45 |
| davon Pd(0)-Komplex | | -- | 5 |
| Dosierung Disilangemisch | [g/h] | 180 | 150 |
| Reaktortemperatur | [°C] | 140 | 140 |
| Kopftemperatur | [°C] | 55 | 55 |
| Destillatmenge | [g/h] | 185 | 150 |

| Zusammensetzung: | | | |
|---|---|---|---|
| Dimethylchlorsilan | [Gew.-%] | 0 | 0,8 |
| Methyldichlorsilan | [Gew.-%] | 5,1 | 28,2 |
| Trimethylchlorsilan | [Gew.-%] | 2,4 | 1,5 |
| Methyltrichlorsilan + Dimethyldichlorsilan | [Gew.-%] | 90,4 | 61,8 |

### Beispiele 6 und 7

Die Beispiele wurden analog den Beispielen 1 bis 3 durchgeführt. Die Ergebnisse sind in Tabelle III zusammengestellt.

### Beispiel 6 (nicht erfindungsgemäß) Katalysator: 3 % Palladium auf Aktivkohle (Typ K 0224 von W.C. Heraeus GmbH, Hanau)

### Beispiel 7 (erfindungsgemäß) Katalysator: 3 % Palladium auf Aktivkohle (wie Beispiel 6) und Triphenylphosphin

**Tabelle III**

| **Beispiel** | | **6** | **7** |
|---|---|---|---|
| Katalysatormenge | [g] | 25 | 65 |
| davon Pd(0)/Aktivkohle | | 25 | 25 |
| Dosierung Disilangemisch | [g/h] | 120 | 180 |
| Reaktortemperatur | [°C] | 140 | 140 |
| Kopftemperatur | [°C] | 60 | 60 |
| Destillatmenge | [g/h] | 125 | 190 |

| Zusammensetzung: | | | |
|---|---|---|---|
| Dimethylchlorsilan | [Gew.-%] | 0 | 1,1 |
| Methyldichlorsilan | [Gew.-%] | 0,6 | 26,7 |
| Trimethylchlorsilan | [Gew.-%] | 0,7 | 1,9 |
| Methyltrichlorsilan + Dimethyldichlorsilan | [Gew.-%] | 91,3 | 60,6 |

## Patentansprüche

1. Verfahren zur Herstellung von wasserstoffhaltigen Methylchlorsilanen der allgemeinen Formel I
RₓCl₃₋ₓSiH, (I)
bei dem Disilane der allgemeinen Formel II
RₓCl₃₋ₓSi-SiRₓCl₃₋ₓ, (II)
wobei in den allgemeinen Formeln I und II
**R** ein Wasserstoffatom, einen Methyl-, Phenyl- oder Ethylrest bedeutet und
**x** die Werte 0, 1, 2 oder 3 hat,
mit Chlorwasserstoff in Gegenwart von Katalysator bestehend aus
A) Palladium(0) und Platin(0) und
B) organischer Verbindung, die ausgewählt wird aus tertiären Aminen, Carbonsäureamiden, Alkylharnstoffen, tertiären Phosphinen, Phosphorsäureamiden, quartären Ammoniumhalogeniden, quartären Phosphoniumhalogeniden oder deren Gemischen
umgesetzt werden.

2. Verfahren nach Anspruch 1, bei dem als Katalysatorbestandteil A Palladium oder Platin der Oxidationsstufe 0 entweder in metallischer Form oder als Komplerverbindungen eingesetzt werden.

3. Verfahren nach Anspruch 1 oder 2, bei dem als Katalysatorbestandteil B tertiäre Amine eingesetzt werden, die Alkylreste mit 1 bis 10 Kohlenstoffatomen aufweisen, welche mit Halogenatomen substituiert sein können.

4. Verfahren nach Anspruch 1 oder 2, bei dem als Katalysatorbestandteil B Carbonsäureamide eingesetzt werden, die mit 2 Alkylresten von jeweils 1 bis 10 Kohlenstoffatomen substituierte Amide von Alkylcarbonsäuren mit 1 bis 10 Kohlenstoffatomen sind, wobei die Alkylreste der Carbonsäuren und am Stickstoffatom mit Halogenatomen substituiert sein können und wobei bei den Carbonsäureamiden ein Alkylrest am Stickstoffatom mit dem Alkylrest an der Carbonsäure zu einem heterocyclischen Ring aus 5 oder 6 Ringatomen verbunden sein kann.

5. Verfahren nach Anspruch 1 oder 2, bei dem als Katalysatorbestandteil B Alkylharnstoffe eingesetzt werden, die Alkylreste mit 1 bis 10 Kohlenstoffatomen aufweisen, welche mit Halogenatomen substituiert sein können und wobei bei den Alkylharnstoffen, zwei Alkylreste miteinander zu einem heterocyclischen Ring aus 5 oder 6 Ringatomen verbunden sein können.

6. Verfahren nach Anspruch 1 oder 2, bei dem als Katalysatorbestandteil B tertiäre Phosphine eingesetzt werden, die 3 Arylreste von jeweils 6 bis 20 Kohlenstoffatomen aufweisen, welche mit Alkylresten mit 1 bis 10 Kohlenstoffatomen und Halogenatomen substituiert sein können.

7. Verfahren nach Anspruch 1 oder 2, bei dem als Katalysatorbestandteil B Phosphorsäureamide eingesetzt werden, die mit 6 Alkylresten von jeweils 1 bis 10 Kohlenstoffatomen substituiert sind, welche mit Halogenatomen substituiert sein können.

8. Verfahren nach Anspruch 1 oder 2, bei dem als Katalysatorbestandteil B quartäre Ammoniumhalogenide eingesetzt werden, die 3 Aryl- oder Alkylreste von jeweils 1 bis 20 Kohlenstoffatomen aufweisen, welche mit Halogenatomen substituiert sein können.

9. Verfahren nach Anspruch 1 oder 2, bei dem als Katalysatorbestandteil B quartäre Phosphoniumhalogenide eingesetzt werden, die 3 Aryl- oder Alkylreste von jeweils 1 bis 20 Kohlenstoffatomen aufweisen, welche mit Halogenatomen substituiert sein können.
